# EUROPÄISCHE PATENTSCHRIFT

(11) **EP 1 383 655 B1**
(45) Veröffentlichungstag und Bekanntmachung des Hinweises auf die Patenterteilung: **30.07.2008**
(21) Anmeldenummer: 02722012.8
(22) Anmeldetag: 15.03.2002
(51) Int. Cl.: B41F 13/03, B65G 21/22

(54) **EINZIEHVORRICHTUNG MIT EINER MAGNETISCH BETÄTIGBAREN WEICHE**
DRAW-IN DEVICE WITH A MAGNETICALLY ACTUATED SWITCH
DISPOSITIF D'ENFILAGE DOTE D'UNE BIFURCATION A ACTIONNEMENT MAGNETIQUE

(30) Priorität: 30.03.2001 DE 10115919
(43) Veröffentlichungstag der Anmeldung: 28.01.2004
(73) Patentinhaber: Koenig & Bauer Aktiengesellschaft, 97080 Würzburg (DE)
(72) Erfinder: KELLER, Martin, Richard, 97753 Karlstadt-Gambach (DE)
(86) Internationale Anmeldenummer: PCT/DE2002/000932
(87) Internationale Veröffentlichungsnummer: WO 2002/078955

(56) Entgegenhaltungen:
- EP-A- 0 810 089
- EP-A- 0 820 862
- DE-A- 2 241 127
- DE-A- 2 728 452
- DE-C- 3 736 886

## Beschreibung

Die Erfindung betrifft eine Einziehvorrichtung gemäß dem Oberbegriff des Anspruches 1.

Durch die DE 22 41 127 A ist eine Vorrichtung zum Einziehen von Materialbahnen bekannt, wobei ein Einzugselement auf verschiedenen Wegen über Weichen durch die Druckmaschine geführt werden kann. Die Weichen weisen Führungsstücke auf, welche nach Verdrehen der gesamten Weiche mit den benachbarten Führungen zusammen wirken.

Die DE 43 18 299 A1 offenbart eine Einziehvorrichtung wobei das Einzugselement zwecks An- und Abschaltens der Antriebsmotoren ein metallisches bzw. ferromagnetisches Material aufweist. Im Weg der Bahn angeordnete Weichen werden pneumatisch betätigt.

In der DE 196 21 507 C1 wird eine Zugeinrichtung innerhalb einer Führung mittels an der Zugeinrichtung angeordneter Magnete und an der Führung angeordneter Linearmotoren angetrieben. Eine Weiche beinhaltet verschiedene Krümmungen für verschiedene Papierwege und ist motorisch betätigbar.

Die DE 37 36 886 C1 beschreibt eine Weiche für ein Bodentransportsystem. Dabei ist ein beweglicher Führungsschuh vor einem in eine Führungsschiene ragenden Führungsbolzen angeordnet. Im Bereich der Weiche sind Elektromagnete vorgesehen, die den Führungsschuh wahlweise an die eine oder andere Wand der Führungsschiene heranziehen, so dass der Führungsschuh an eine der Abzweigführungsschienen eingeführt wird.

Die EP 0 820 862 A2 offenbart eine Vorrichtung zum Bahntransport, wobei an einem speziell ausgebildeten Transportmittel in Längsrichtung abwechselnd verschiedene Polungen von Magneten angeordnet sind, welche für eine Vorschubbewegung mit einer an einer Führung angeordneten Statoreinrichtung zusammen wirken. Für die Führung ist in einem Ausführungsbeispiel eine starre Weiche vorgesehen, wobei mittels Elektromagneten der Transportweg aufgrund einer magnetischen Wechselwirkung zwischen dem Transportmittel und dem Elektromagneten wählbar ist.

Der Erfindung liegt die Aufgabe zugrunde, eine einfach aufgebaute Einziehvorrichtung zu schaffen, mittels welcher ein Weg der Rollenkette detektierbar und wählbar ist.

Die Aufgabe wird erfindungsgemäß durch die Merkmale des Anspruches 1 gelöst.

Die mit der Erfindung erzielbaren Vorteile bestehen darin, dass eine einfach aufgebaute und wartungsarme Weiche geschaffen ist, welche einen Wechsel in der Bahnführung und eine gleichzeitige Detektion des Einzugsmittels erlaubt.

Die Gefahr eines Verklemmens der Weiche und des Einzugsmittels, beispielsweise aufgrund von Verschmutzungen, wird erheblich verringert, da die Weiche keine beweglichen Teile aufweist und auch selbst nicht verschwenkt wird.

Da die Weiche mittels eines magnetischen Feldes betrieben wird, kann eine Detektion eines Anfangs oder Endes mittels der sich an der Weiche ändernden Felder erfolgen.

In einer vorteilhaften Ausführungsform sind zwecks Verstärkung der Kraft zwei gegenüberliegende Magnete am Weg des Transportmittels angeordnet. Beide Magnete sind in ihrer Flußrichtung umschaltbar, so dass in einer Betriebsweise das Transportmittel auf den einen Weg und in der anderen Betriebsweise auf den anderen Weg geführt werden kann.

In einer Weiterbildung ist mindestens ein Teil des vorlaufenden Endes des Einzugsmittels, z. B. eine erste Rolle einer Rollenkette, aus magnetischem Material ausgeführt.

Ausführungsbeispiele der Erfindung sind in den Zeichnungen dargestellt und werden im folgenden näher beschrieben.

Es zeigen:
- Fig. 1: eine schematische Darstellung einer Rollenrotationsmaschine;
- Fig. 2: eine Weiche nach einem ersten Ausführungsbeispiel;
- Fig. 3: eine Weiche nach einem zweiten Ausführungsbeispiel.

Eine Transportvorrichtung zum Transport einer Bahn 01, z. B. einer Materialbahn in bzw. durch eine Arbeitsmaschine zur Bearbeitung der Materialbahn, insbesondere zum Einziehen einer Bedruckstoffbahn 01 in eine Rollenrotationsdruckmaschine, weist ein Transportmittel 02, z. B. eine Transportkette 02 und mindestens ein die Transportkette 02 antreibendes Antriebsmittel 03; 04 auf. Das Transportmittel 02 kann auch als ein endliches Band, z. B. ein Metall band oder eine Gliederkette ausgeführt sein.

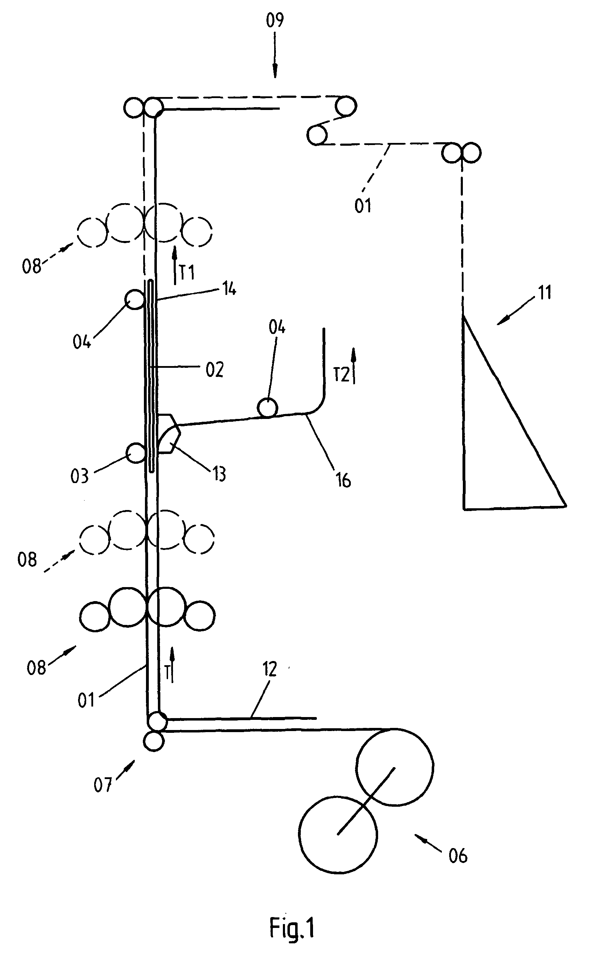

Beispielsweise ist die Bedruckstoffbahn 01 von einem Rollenträger 06 über ein Einzugwerk 07, durch ein oder mehrere Druckwerke 08, und, falls eine entsprechende Einrichtung vorgesehen ist, auch über einen Überbau (Wende- und/oder Schnittbereich) 09 und einen Trichterbereich 11 in die Rollenrotationsdruckmaschine einzuziehen (lediglich schematisch in Fig. 1 dargestellt). Insbesondere in Rollenrotationsdruckmaschinen mit mehreren Druckwerken 08 bzw. mehreren Druckeinheiten, wie z. B. mehreren Brückendruckeinheiten oder Satellitendruckeinheiten ist je nach Anforderung an das zu druckende Produkt ein unterschiedlicher Lauf der Bahn 01 durch die Druckmaschine erforderlich.

Zu diesem Zweck wird der Anfang der Bedruckstoffbahn 01, beispielsweise mittels einer nicht dargestellten Einziehspitze und einem Koppelstück, an der Transportkette 02 angeordnet. Die vorzugsweise endliche Transportkette 02 ist in einer Führung 12 angeordnet, welche entlang gewünschter und vorwählbarer Wege der Bahn 01 verläuft. Die Führung 12 weist zumindest eine Weiche 13 auf, welche verschiedene Transportwege 14; 16, z. B. von einer Transportrichtung T kommend wahlweise in eine erste Transportrichtung T1 oder eine zweite Transportrichtung T2, durch die Druckmaschine ermöglicht.

Zumindest im Bereich seines vorlaufenden Endes 17 weist das Transportmittel 02 ein metallisches, ein magnetisierbares oder magnetisches Material, z. B. ein dauermagnetisches Material, auf.

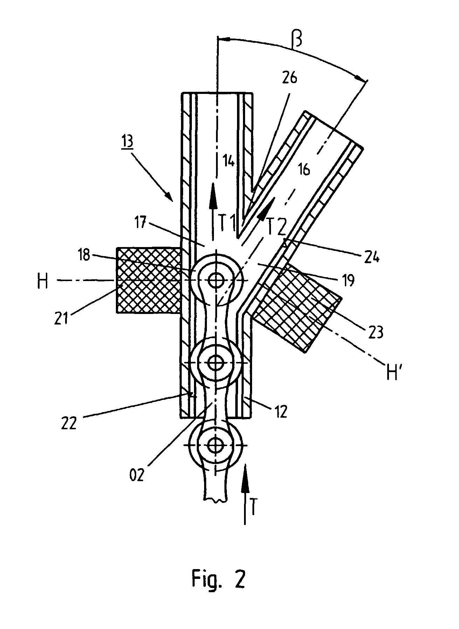

Fig. 2 zeigt ein als Rollenkette 02 ausgeführtes Transportmittel 02, wobei zumindest eine erste Rolle 18 ein dauermagnetisches Material aufweist. Es kann lediglich die Lauffläche, oder aber auch die gesamte Rolle 18 aus dem dauermagnetischen Material gefertigt sein.

Die Weiche 13 weist im Bereich einer Gabelung 19 der Transportwege 14; 16 zumindest auf einer Seite der Führung 12 einen ersten Magneten 21, insbesondere einen Elektromagneten 21, auf. Die Weiche 13 weist in Fig. 2 die Gabelung 19 des Transportweges T in zwei Transportwege T1, T2 auf, wobei der eine Transportweg T1 gerade verläuft, und der andere Transportweg T2 um einen Winkel β, z. B. 10° < β < 60°, insbesondere 20° < β < 40° von der vor der Weiche 13 liegenden, ursprünglichen Transportrichtung T abzweigt.

Der Elektromagnet 21 ist in Fig. 2 so an der Weiche 13 angeordnet, dass eine gedachte und idealisierte Mittelachse H der im Elektromagneten 21 verlaufenden Magnetfeldlinien eine dem Elektromagnet 21 benachbarte Lauffläche 22 der Rolle 18 in einem Winkel zwischen 45° und 135°, insbesondere zwischen 80° und 100° schneidet.

Die Weiche 13 in Fig. 2 weist im Bereich der Gabelung 19, jedoch dem ersten Magneten 21 nahezu gegenüber liegend, einen zweiten Magneten 23, insbesondere einen zweiten Elektromagneten 23, auf. Dieser ist ebenfalls direkt benachbart zu einer der ersten Lauffläche 22 gegenüberliegenden zweiten Lauffläche 24 angeordnet, wobei auch hier eine idealisierte Mittelachse H' die zugeordnete Lauffläche 24 unter einem Winkel von 45° und 135°, insbesondere von 80° bis 100° schneidet.

in vorteilhafter Ausführung des Ausführungsbeispiels nach Fig. 2 sind die beiden Magnete 21; 23 so angeordnet, dass sich die beiden gedachten Mittelachsen H; H' in Transportrichtung T gesehen vor einer die beiden Transportwege 14; 16 trennenden Nase 26 der Weiche 13 schneiden.

Die Mittelachsen H; H' und die Transportrichtungen T; T1; T2 im Bereich der Weiche 13 liegen in vorteilhafter Ausführung nahezu in einer Ebene.

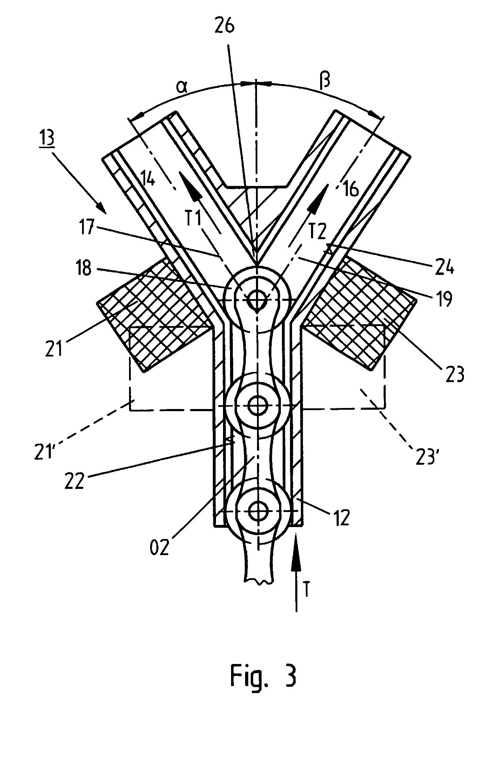

In einem zweiten Ausführungsbeispiel (Fig. 3) weist die Weiche 13 eine Gabelung 19 in zwei Transportwege T1, T2 auf, welche nach der Gabelung 19 beide jeweils um einen Winkel α, β von der vor der Weiche 13 liegenden, ursprünglichen Transportrichtung T abweichen. In vorteilhafter Ausführung sind die beiden Winkel α, β gleich groß und liegen jeweils z. B. zwischen 10° und 60°, vorzugsweise zwischen 20° und 45°. Vorteilhaft ist in dieser Ausführung, dass die die Transportwege T1, T2 trennende Nase 26 mehr oder weniger mittig zur ursprünglichen Transportrichtung T liegt, und somit lediglich eine kleine "Störung" durch einen oder mehrere Magnete 21; 23 erforderlich ist, um das Transportmittel 02 in die eine oder die andere Transportrichtung T1; T2 zu lenken.

Die Magnete 21; 23 können aufgrund des genannten im Ausführungsbeispiel nach Fig. 3 in einem weiten Bereich der Weiche 13 angeordnet sein. Sie können, wie mit durchgezogenen Linien dargestellt, jeweils direkt im Anschluß nach einem durch die Gabelung 19 bedingten Knick, aber auch vor diesem Knick, wie strichliert in Fig. 3 für die Magneten 21; 23' dargestellt, angeordnet sein. Mit entsprechender Unterfütterung oder Formgebung der Magnete 21; 23, könne diese auch den Knick überspannend angeordnet sein.

In einer Weiterbildung der Erfindung sind mehrere, z. B. auch alle Rollen 18 der Rollenkette 02 aus magnetischem Material ausgeführt. Vorteilhaft ist hier, dass die Rollenkette 02 so auf ihrer gesamten Länge im Bereich der Gabelung 19 an der gewählten Lauffläche 22; 24 anliegt.

In einer weiteren, jedoch nicht dargestellten Ausführung ist das Transportmittel 02 als Zahnband 02 oder als Zahnstange 02 ausgeführt. In diesem Fall kann das Transportmittel 02 aus dauermagnetischem Material ausgeführt sein, eine ummantelte dauermagnetische Seele aufweisen, oder aber insgesamt aus einem metallischen, insbesondere ferromagnetischen Material gefertigt sein.

Ebenso ist auch eine Ausführung der Weiche 13 mit nur einem der beiden Magneten 21; 23 bzw. 21'; 23'oder aber auch mit mehr als zwei Magneten 21; 23 bzw. 21'; 23' möglich.

Die Funktionsweise der erfindungsgemäßen Weiche ist wie folgt:
Vor dem Einziehen einer neuen Bahn 01 wird, beispielsweise über einen nicht dargestellten Leitstand ein gewünschter und/oder vorprogrammierter Weg für die Bahn 01 durch die Druckmaschine angewählt. Entsprechend dieses Weges wird nun mittels der Antriebsmittel 03; 04 das endliche Transportmittel 02 in der Führung 12 transportiert.

Die Weichen 13, in Fig. 1 lediglich eine Weiche 13, können nun entweder nach Programmfestlegung bereits alle entsprechend des Weges aktiviert sein, oder aber sie werden nacheinander in Abhängigkeit vom Fortschritt des Einziehens aktiviert.

Im ersten Fall werden alle Magnete 21; 23 derart mit elektrischem Strom beaufschlagt, dass für das Transportmittel 02 der gewünschte Weg eingehalten wird. Nach Beendigung des Einziehvorgangs werden die Magnete 21; 23 deaktiviert.

Im zweiten Fall ändert sich bei Eintritt des metallischen oder magnetischen Transportmittels 02 in den Wirkungsbereich der Magneten 21; 23 der magnetische Fluß, so dass beispielsweise ein Eintreten des vorlaufenden Endes 17 durch Induktion im Magneten 21; 23 selbst oder eine zusätzliche Sonde erkennbar ist. Die beiden Magnete 21; 23 werden nun durch Beaufschlagung mit elektrischem Strom aktiviert, so dass sie das vorlaufende Ende 17 des Transportmittels 02 auf die selbe Lauffläche zu bewegen bzw. dort halten (z. B. ein Magnet 21; 23 zieht, der andere Magnet 23; 21 drückt). Wenn das Transportmittel 02 nun insgesamt die Weiche 13 verlassen hat, ist dies wieder durch Änderung des magnetischen Flusses mittels des Magneten 21; 23 selbst oder eine zusätzliche Sonde, z. B. eine Hallsonde, erkennbar. Somit kann die genaue Position des Transportmittels 02 am Leitstand angezeigt werden.

### Bezugszeichenliste

- 01: Bahn, Bedruckstoffbahn
- 02: Transportmittel, Transportkette, Rollenkette
- 03: Antriebsmittel
- 04: Antriebsmittel
- 05: -
- 06: Rollenträger
- 07: Einzugwerk
- 08: Druckwerk
- 09: Überbau
- 10: -
- 11: Trichterbereich
- 12: Führung (02)
- 13: Weiche (12)
- 14: Transportweg (02)
- 15: -
- 16: Transportweg (02)
- 17: Ende, vorlaufend (02)
- 18: Rolle (02)
- 19: Gabelung (14,16)
- 20: -
- 21: Magnet, erster, Elektromagnet (21': alternative Position)
- 22: Lauffläche (12)
- 23: Magnet, zweiter, Elektromagnet (23':alternative Position)
- 24: Lauffläche (12)
- 25: -
- 26: Nase (19)

- α: Winkel (T, T1)
- β: Winkel (T, T2)

- H: Mittelachse
- H': Mittelachse
- T: Transportrichtung, ursprünglich
- T1: Transportrichtung, erste
- T2: Transportrichtung, zweite

## Patentansprüche

1. Einziehvorrichtung zum Einziehen einer Bahn (01) in eine Rollenrotationsdruckmaschine mit einer Weiche (13) einer Führung (12) eines als Rollenkette (02) ausgebildeten Einzugsmittels (02), mittels welcher einer von verschiedenen Transportwegen (14; 16) des Einzugsmittels (02) wählbar ist, **dadurch gekennzeichnet, dass** an der Weiche (13) mindestens ein Elektromagnet (21; 23) angeordnet ist, mittels welchem der Transportweg (14; 16) aufgrund einer magnetischen Wechselwirkung zwischen zumindest einem Teil des Einzugsmittels (02) selbst und dem Elektromagneten (21; 23) wählbar und ein Eintreten eines Anfanges oder ein Austreten eines Endes der Rollenkette (02) detektierbar ist.

2. Einziehvorrichtung nach Anspruch 1, **dadurch gekennzeichnet, dass** die Weiche (13) ohne eine mechanische Bewegung von Teilen der Weiche (13) oder der Weiche (13) selbst betätigbar ist.

3. Einziehvorrichtung nach Anspruch 1, **dadurch gekennzeichnet, dass** im Bereich einer Gabelung (19) der Wegstrecken (14; 16) ein einziger Magnet (21; 23) angeordnet ist.

4. Einziehvorrichtung nach Anspruch 1, **dadurch gekennzeichnet, dass** im Bereich einer Gabelung (19) der Wegstrecken (14; 16) zwei Magnete (21; 23) angeordnet sind.

5. Einziehvorrichtung nach Anspruch 4; **dadurch gekennzeichnet, dass** die beiden Magnete (21; 23) auf jeweils gegenüberliegenden Seiten des in der Weiche (13) befindlichen Einzugsmittels (02) angeordnet sind.

6. Einziehvorrichtung nach Anspruch 3 oder 4, **dadurch gekennzeichnet, dass** der Magnet (21; 23) auf der einer Lauffläche (22; 24) des Einzugsmittels (02) zugewandten Seite der Gabelung (19) angeordnet ist.

7. Einziehvorrichtung nach Anspruch 1, **dadurch gekennzeichnet, dass** zumindest ein vorlaufendes Ende (17) des Einzugsmittels (02) ein metallisches, insbesondere ferromagnetisches Material aufweist.

8. Einziehvorrichtung nach Anspruch 1, **dadurch gekennzeichnet, dass** zumindest ein vorlaufendes Ende (17) des Einzugsmittels (02) ein dauermagnetisches Material aufweist.

9. Einziehvorrichtung nach Anspruch 1, **dadurch gekennzeichnet, dass** zumindest eine erste Rolle (18) der Rollenkette (02) das dauermagnetische Material aufweist.

10. Einziehvorrichtung nach Anspruch 1; **dadurch gekennzeichnet, dass** alle Rollen (18) der Rollenkette (02) das dauermagnetische Material aufweisen.

11. Einziehvorrichtung nach Anspruch 6, **dadurch gekennzeichnet, dass** eine Mittelachse (H; H') des Magneten (21; 23) die dem Magneten (21; 23) benachbarte Lauffläche (22; 24) des Einzugsmittels (02) in einem Winkel zwischen 45° und 135°, insbesondere zwischen 80° und 100° schneidet.

12. Einziehvorrichtung nach Anspruch 11, **dadurch gekennzeichnet, dass** die Mittelachse (H; H') und mindestens zwei Transportrichtungen (T; T1; T2) im Bereich der Weiche (13) annähernd in einer Ebene liegen.

13. Einziehvorrichtung nach Anspruch 3 oder 4, **dadurch gekennzeichnet, dass** eine erste Transportrichtung (T1) nach der Gabelung (13) in Verlängerung zur ursprünglichen Transportrichtung (T) für das Einzugsmittel (02) und eine zweite Transportrichtung (T2) in einem Winkel (β) ungleich Null zur ursprünglichen Transportrichtung (T) verläuft.

14. Einziehvorrichtung nach Anspruch 13, **dadurch gekennzeichnet, dass** der Winkel (β) in einem Bereich von 10° bis 60°, insbesondere zwischen 20° und 40°, liegt.

15. Einziehvorrichtung nach Anspruch 3 oder 4, **dadurch gekennzeichnet, dass** eine erste Transportrichtung (T1) nach der Gabelung (13) in einem Winkel (α) ungleich Null zur ursprünglichen Transportrichtung (T) und eine zweite Transportrichtung (T2) in einem Winkel (β) ungleich Null zur ursprünglichen Transportrichtung (T) verläuft.

16. Einziehvorrichtung nach Anspruch 15, **dadurch gekennzeichnet, dass** die beiden Winkel (α; β) gleich groß sind und in einem Bereich zwischen 10° und 60°, vorzugsweise zwischen 20° und 45°, liegen.

17. Einziehvorrichtung nach Anspruch 5, 6 und 13, **dadurch gekennzeichnet, dass** sich Mittelachsen (H; H') der Magnete (21; 23) in Transportrichtung (T; T') gesehen vor einer die Transportwege (14; 16) trennenden Nase (26) der Weiche (13) schneiden.

18. Einziehvorrichtung nach Anspruch 1, **dadurch gekennzeichnet, dass** mindestens ein Sensor zur Feststellung der Position des Einzugsmittels (02) angeordnet ist.

## Claims

1. A draw-in apparatus for drawing a web (01) into a web-fed rotary printing press with a switch point (13) of a guide (12) of an infeed means (02) constructed in the form of a roller chain (02), by means of which one of various conveying paths (14; 16) of the infeed means (02) is capable of being selected, **characterized in that** at least one electromagnet (21; 23) is arranged on the switch point (13), it being possible for the conveying path (14; 16) to be selected by means of the said electromagnet (21; 23) on the basis of a magnetic interaction between at least one part of the infeed means (02) itself and the electromagnet (21; 23) and for the entry of a start of the roller chain (02) or the exit of an end thereof to be detected.

2. A draw-in apparatus according to Claim 1, **characterized in that** the switch point (13) is capable of being actuated without a mechanical movement of parts of the switch point (13) or of the switch point (13) itself.

3. A draw-in apparatus according to Claim 1, **characterized in that** a single magnet (21; 23) is provided in the region of a fork (19) of the paths (14; 16).

4. A draw-in apparatus according to Claim 1, **characterized in that** two magnets (21; 23) are provided in the region of a fork (19) of the paths (14; 16).

5. A draw-in apparatus according to Claim 4, **characterized in that** the two magnets (21; 23) are arranged on mutually opposed sides of the infeed means (02) present in the switch point (13).

6. A draw-in apparatus according to Claim 3 or 4, **characterized in that** the magnet (21; 23) is arranged on the side of the fork (19) facing a running face (22; 24) of the infeed means (02).

7. A draw-in apparatus according to Claim 1, **characterized in that** at least one leading end (17) of the infeed means (02) comprises a metallic, and in particular ferromagnetic, material.

8. A draw-in apparatus according to Claim 1, **characterized in that** at least one leading end (17) of the infeed means (02) comprises a permanent-magnetic material.

9. A draw-in apparatus according to Claim 1, **characterized in that** at least one first roller (18) of the roller chain (02) comprises the permanent-magnetic material.

10. A draw-in apparatus according to Claim 1, **characterized in that** all the rollers (18) of the roller chain (02) comprise the permanent-magnetic material.

11. A draw-in apparatus according to Claim 6, **characterized in that** a centre axis (H; H') of the magnet (21; 23) intersects the running face (22; 24) of the infeed means (02) adjacent to the magnet (21; 23) at an angle of between 45° and 135°, and in particular between 80° and 100°.

12. A draw-in apparatus according to Claim 11, **characterized in that** the centre axis (H; H') and at least two conveying directions (T; T1; T2) are situated substantially in one plane in the region of the switch point (13).

13. A draw-in apparatus according to Claim 3 or 4, **characterized in that** after the fork (13) a first conveying direction (T1) extends as a continuation of the original conveying direction (T) for the infeed means (02) and a second conveying direction (T2) extends at an angle (β) not equal to zero to the original conveying direction (T).

14. A draw-in apparatus according to Claim 13, **characterized in that** the angle (β) is in a range of from 10° to 60°, and in particular between 20° and 40°.

15. A draw-in apparatus according to Claim 3 or 4, **characterized in that** after the fork (13) a first conveying direction (T1) extends at an angle (α) not equal to zero to the original conveying direction (T) and a second conveying direction (T2) extends at an angle (β) not equal to zero to the original conveying direction (T).

16. A draw-in apparatus according to Claim 15, **characterized in that** the two angles (α, β) are of equal magnitude and are in a range of between 10° and 60°, and preferably between 20° and 45°.

17. A draw-in apparatus according to Claims 5, 6 and 13, **characterized in that** the centre axes (H; H') of the magnets (21; 23) intersect each other in front of a projection (26) of the switch point (13) separating the conveying paths (14; 16), as viewed in the conveying direction (T; T').

18. A draw-in apparatus according to Claim 1, **characterized in that** at least one sensor is provided in order to determine the position of the infeed means (02).

## Revendications

1. Dispositif d'enfilage, pour enfiler une bande (01) dans une machine à imprimer rotative à bobines, avec un aiguillage (13) d'un guidage (12) d'un moyen d'introduction (02) réalisé sous la forme de chaîne à rouleaux (02), aiguillage au moyen duquel l'un, de différents chemins de transport (14; 16) du moyen d'introduction (02), est susceptible d'être sélectionné, **caractérisé en ce que** sur l'aiguillage (13) est disposé au moins un électroaimant (21; 23), au moyen duquel le chemin de transport (14; 16) est susceptible d'être sélectionné, du fait d'une interaction magnétique entre au moins une partie du moyen d'introduction (02) même et l'électroaimant (21; 23), et une entrée d'une amorce ou une sortie d'une extrémité de la chaîne à rouleaux (02) est susceptible d'être détectée.

2. Dispositif d'enfilage selon la revendication 1, **caractérisé en ce que** l'aiguillage (13) est actionnable sans mouvement mécanique de parties de l'aiguillage (13) ou de l'aiguillage (13) lui-même.

3. Dispositif d'enfilage selon la revendication 1, **caractérisé en ce qu'**un aimant (21; 23) unique est disposé dans la zone d'une bifurcation (19) des pistes de cheminement (14; 16).

4. Dispositif d'enfilage selon la revendication 1, **caractérisé en ce que** deux aimants (21; 23) sont disposés dans la zone d'une bifurcation (19) des pistes de cheminement (14; 16).

5. Dispositif d'enfilage selon la revendication 4, **caractérisé en ce que** les deux aimants (21; 23) sont disposés sur des côtés chaque fois opposés du moyen d'introduction (02) se trouvant dans l'aiguillage (13).

6. Dispositif d'enfilage selon la revendication 3 ou 4, **caractérisé en ce que** l'aimant (21; 23) est disposé sur un côté, tourné vers une surface de défilement (22; 24) du moyen d'introduction (02), de la bifurcation (19).

7. Dispositif d'enfilage selon la revendication 1, **caractérisé en ce qu'**une extrémité avant (17) du moyen d'introduction (02) présente un matériau métallique, en particulier ferromagnétique.

8. Dispositif d'enfilage selon la revendication 1, **caractérisé en ce qu'**au moins une extrémité avant (17) du moyen d'introduction (02) présente un matériau à magnétisme permanent.

9. Dispositif d'enfilage selon la revendication 1, **caractérisé en ce qu'**au moins un premier rouleau de la chaîne à rouleaux (02) présente le matériau à magnétisme permanent.

10. Dispositif d'enfilage selon la revendication 1, **caractérisé en ce que** tous les rouleaux (18) de la chaîne à rouleaux (02) présentent le matériau à magnétisme permanent.

11. Dispositif d'enfilage selon la revendication 6, **caractérisé en ce qu'**un axe médian (H; H') de l'aimant (21; 23) coupe la surface de défilement (22; 24), voisine de l'aimant (21; 23), du moyen d'introduction (02), sous un angle dans la fourchette comprise entre 45° et 135°, en particulier entre 80° et 100°.

12. Dispositif d'enfilage selon la revendication 11, **caractérisé en ce que** l'axe médian (H; H') et au moins deux directions de transport (T; T1; T2), dans la zone de l'aiguillage (13), sont situés à peu près dans un plan.

13. Dispositif d'enfilage selon la revendication 3 ou 4, **caractérisé en ce qu'**une première direction de transport (T1), après la bifurcation (13), s'étend dans le prolongement de la direction de transport (T) initiale pour le moyen d'introduction (02), et une deuxième direction de transport (T2) s'étend sous un angle (β) différent de zéro par rapport à la direction de transport (T) initiale.

14. Dispositif d'enfilage selon la revendication 13, **caractérisé en ce que** l'angle (β) est compris dans une fourchette allant de 10° à 60°, en particulier compris dans une fourchette entre 20° et 40°.

15. Dispositif d'enfilage selon la revendication 3 ou 4, **caractérisé en ce qu'**une première direction de transport (T1), après la bifurcation (13), s'étend sous un angle (α) différent de zéro par rapport à la direction de transport (T) initiale, et une deuxième première direction de transport (T2) s'étend sous un angle (β) différent de zéro par rapport à la direction de transport (T) initiale.

16. Dispositif d'enfilage selon la revendication 15, **caractérisé en ce que** les deux angles (α, β) sont de valeur identique et compris dans une fourchette allant de 10° à 60°, de préférence compris dans une fourchette entre 20° et 45°.

17. Dispositif d'enfilage selon la revendication 5, 6 et 13, **caractérisé en ce que** des axes médian (H; H') des aimants (21; 23), observés dans la direction de transport (T; T'), se coupent, en amont d'un bec (26), séparant les chemins de transport (14; 16), de l'aiguillage (13).

18. Dispositif d'enfilage selon la revendication 1, **caractérisé en ce qu'**au moins un capteur est disposé pour détecter la position du moyen d'introduction (02).
